# EUROPEAN PATENT SPECIFICATION

(11) **EP 3 522 397 B1**
(45) Date of publication and mention of the grant of the patent: **20.05.2026**
(21) Application number: 19153323.1
(22) Date of filing: 23.01.2019
(51) Int. Cl.: H04B 10/071, H04B 10/272, H04Q 11/00

(54) **DETECTION METHOD AND APPARATUS**
DETEKTIONSVERFAHREN UND -VORRICHTUNG
APPAREIL ET PROCÉDÉ DE DÉTECTION

(30) Priority: 24.01.2018 CN 201810069378
(43) Date of publication of application: 07.08.2019
(73) Proprietor: Huawei Technologies Co., Ltd., Shenzhen, Guangdong 518129 (CN)
(72) Inventor: WU, WenJing, Shenzhen, Guangdong 518129 (CN)
(74) Representative: Maiwald GmbH

(56) References cited:
- EP-A1- 2 141 832
- EP-A1- 3 101 826
- US-A1- 2006 029 390
- US-A1- 2013 188 947
- W CHEN ET AL: "Embedded OTDR Monitoring of the Fiber Plant behind the PON Power Splitter", 1 December 2006 (2006-12-01), XP055165127, Retrieved from the Internet <URL:http://photonics-benelux.org/proc06/s06p013.pdf> [retrieved on 20150127]
- YUKSEL K ET AL: "Optical layer monitoring in Passive Optical Networks (PONs): A review", TRANSPARENT OPTICAL NETWORKS, 2008. ICTON 2008. 10TH ANNIVERSARY INTERNATIONAL CONFERENCE ON, IEEE, PISCATAWAY, NJ, USA, 22 June 2008 (2008-06-22), pages 92 - 98, XP031306064, ISBN: 978-1-4244-2625-6
- BERT DE MULDER ET AL: "Nonintrusive Fiber Monitoring of TDM Optical Networks", JOURNAL OF LIGHTWAVE TECHNOLOGY, IEEE, USA, vol. 25, no. 1, 1 January 2007 (2007-01-01), pages 305 - 317, XP011175454, ISSN: 0733-8724, DOI: 10.1109/JLT.2006.887184

## Description

### TECHNICAL FIELD

This application relates to the communications field, and in particular, to a detection method and apparatus.

### BACKGROUND

In a current process of constructing a fiber to the home (fiber to the home, FTTH) network, an operator assigns installation and maintenance engineers in a unified manner to install and accept an optical distribution network (optical distribution network, ODN) part (an outside plant (outside plant, OSP) and an inside plant (inside plant, ISP)), including an optical network unit (optical network unit, ONU). Advantages are that the operator usually has a standard installation specification, and installation quality is assured because acceptance is performed. However, disadvantages are also obvious. The inside plant (inside plant, ISP) part involves fiber to the home, a user needs to make a reservation for installation and drill a hole in a wall because a fiber needs to pass through the wall, and there are different requirements for indoor cable routing, resulting in high fiber to the home costs. Especially in some countries with high labor costs, difficulty in installing a fiber in a home and high costs are primary reasons that make FTTH difficult to promote.

In an existing technical solution, the installation and maintenance engineers of the operator install a drop fiber and the ONU in a home, measure an optical power of the drop fiber by using a specialized optical power meter to check whether the optical power meets a requirement, and when a problem occurs, perform diagnosis to determine whether the drop fiber is faulty. After the ONU is powered on, the installation and maintenance engineers further need to check whether a service is normal.

However, the prior art has the following disadvantage: A specialized optical power meter needs to be carried, so that when an ODN encounters a problem, problem diagnosis may be performed to find out whether a drop fiber is faulty, or a distribution fiber or another ODN component of the operator is faulty. That is, the ONU has difficulty in locating a fault when the drop fiber is being installed.

There are also other existing technical solutions. US 2006/0029390 A1 provides a method for monitoring a passive optical distribution network; an optical network terminal of the passive optical distribution network comprises a transceiver, having transmitting means being designed to send a first monitoring signal through an optical fiber link of a drop section, and receiving means, being designed to receive parts of the first monitoring signal reflected within the optical fiber link of the drop section. In US 2006/0029390 A1, the wavelength of the monitoring signal is equal to the wavelength of the data signal, and the data receiver inside the transceiver is reused for the detection of the monitoring signal. EP3101826 discloses that a wireless device may communicate a control signal that initiates communication of an input light signal into a fiber optic cable and/or reception of an output light signal as part of a certification test of the fiber optic cable.

### SUMMARY

Embodiments of this application provide a detection method, so that an ONU performs acceptance on a drop fiber, thereby eliminating a need of performing detection by specialized installation and maintenance engineers, saving human resources, and reducing costs. The invention is set out in the appended set of claims.

From the technical solutions, it can be learned that the embodiments of this application have the following advantages:

In the embodiments of this application, the method is applied to the optical network unit ONU, the light source and the optical power meter are disposed in the ONU, and the method includes: obtaining, by the ONU, the first acceptance request; starting, by the ONU according to the first acceptance request, the light source to emit the first light that meets the preset condition; receiving, by the ONU, the second light, where the second light is the light obtained after the first light is reflected by the reflector; determining, by the ONU, the loss according to the first light and the second light by using the optical power meter; and determining, if the loss falls within the preset range, that the acceptance succeeds; or determining, if the loss falls beyond the preset range, that the acceptance fails. That is, the ONU may perform acceptance on drop fiber installation, and detection or problem diagnosis does not need to be performed by specialized installation and maintenance engineers, thereby saving human resources and reducing costs.

### BRIEF DESCRIPTION OF DRAWINGS

To describe the technical solutions in the embodiments of this application more clearly, the following briefly describes the accompanying drawings required for describing the embodiments and the prior art. Apparently, the accompanying drawings in the following description show merely some embodiments of this application, and other drawings may still be derived from these accompanying drawings.
FIG 1 is a diagram of a system architecture applied to an embodiment of this application;
FIG 2 is a schematic diagram of an embodiment of a detection method according to an embodiment of this application;
FIG 3 is a schematic diagram of a scenario applied to an embodiment of this application;
FIG. 4 is a schematic diagram of another embodiment of a detection method according to an embodiment of this application;
FIG. 5 is a schematic diagram of another scenario applied to an embodiment of this application;
FIG. 6A is a schematic diagram of an embodiment of an optical network unit according to an embodiment of this application;
FIG. 6B is a schematic diagram of another embodiment of an optical network unit according to an embodiment of this application;
FIG. 7 is a schematic diagram of another embodiment of an optical network unit according to an embodiment of this application;
FIG. 8 is a schematic diagram of an embodiment of a mobile terminal according to an embodiment of this application; and
FIG. 9 is a schematic diagram of another embodiment of a mobile terminal according to an embodiment of this application.

### DESCRIPTION OF EMBODIMENTS

Embodiments of this application provide a detection method, so that an ONU performs acceptance on drop fiber installation, thereby eliminating a need of performing detection by specialized installation and maintenance engineers, saving human resources, and reducing costs.

To make persons skilled in the art understand the solutions in this application better, the following describes the technical solutions in the embodiments of this application with reference to the accompanying drawings in the embodiments of this application. Apparently, the described embodiments are merely some but not all of the embodiments of this application. All other embodiments obtained based on the embodiments of this application shall fall within the protection scope of this application.

Fiber to the home (fiber to the home, FTTH) is a fiber communication transmission method. In FTTH, a fiber is directly connected to a home of a user, that is, a place required by the user. Specifically, in FTTH, an optical network unit (optical network unit, ONU) is installed at a place of a residential user or an enterprise user. In an optical access series, FTTH is an optical access network application type in which a fiber is closest to the user, except fiber to the desktop (fiber to the desktop, FTTD). Significant technical characteristics of FTTH are as follows: being capable of providing a higher bandwidth, enhancing transparency of a data format, a rate, a wavelength, and a protocol on a network, lowering requirements for an environmental condition, power supply, and the like, and simplifying maintenance and installation. When the fiber is directly connected to the home of the user, none of a bandwidth, a wavelength, or a transmission technology type of the fiber is limited. Therefore, FTTH is suitable for introduction of various new services, is a relatively ideal service-transparent network, and is a development direction of an access network.

Although a development speed of mobile communications is astonishing at present, people are still pursuing a fixed terminal with relatively better performance because of factors such as a limited bandwidth, a limited terminal size, and a limited display screen of mobile communications. In other words, people expect to implement fiber to the home. A highlight of fiber to the home lies in that fiber to the home provides an extremely high bandwidth. Fiber to the home is a relatively good solution for resolving a bottleneck problem of a "last mile" from an Internet backbone network to a user desktop.

A passive optical network (passive optical network, PON) is a network that is applied to the access network and in which a central office device and a plurality of user end devices are connected by using an optical distribution network (optical distribution network, ODN) that includes a passive optical cable, a passive optical splitter/combiner, and the like. The central office device is, for example, an optical line terminal (optical line terminal, OLT). The user end device is, for example, an optical network unit (optical network unit, ONU), or an optical network terminal (optical network terminal, ONT). It should be noted that the ONU may include the ONT. Outdoors, the user end device may be referred to as the ONU. Indoors, the user end device may be referred to as the ONT.

A key point of "passive" is that the ODN between the OLT and the ONU is an optical access network without any active electronic device. Because of this "passive" feature, the PON, a pure medium network, can avoid electromagnetic interference from an external device and lightning impact, thereby reducing a line failure rate and an external device failure rate, improving system reliability, and also reducing maintenance costs.

However, in the prior art, specialized installation and maintenance engineers need to perform home installation, causing high labor costs. A specialized optical power meter needs to be carried, so that when an ODN network encounters a problem, problem diagnosis may be performed to find out whether a drop fiber is faulty, or a distribution fiber or another ODN component of an operator is faulty. The installation and maintenance engineers need to perform on-site acceptance on a service, and efficiency is low.

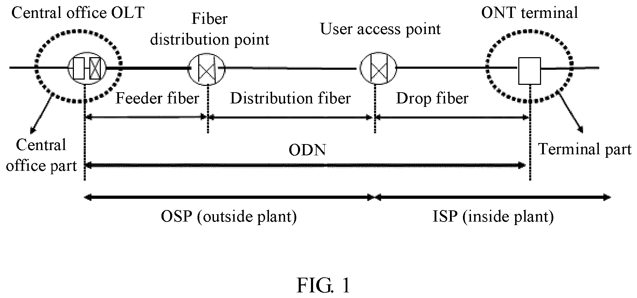

In an embodiment of this application, an ONU or ONT detection method is provided, and may be used to detect ONU installation by a user and to address difficulty with fault diagnosis (for example, professional installation and maintenance engineers and a specialized optical component are required for diagnosis and acceptance). As shown in FIG. 1, FIG. 1 is a diagram of a system architecture applied to an embodiment of this application.

As shown in FIG. 1, an operator deploys an FTTH service, installs an optical line terminal (optical line terminal, OLT), lays an ODN network, installs a reflector in a junction box at a user access point, and provides a fiber interface. When a user applies for service provisioning online, accessories such as an ONT and a drop fiber may be mailed to the user. Alternatively, when a user applies for the service in a business office, the user receives accessories such as an ONT and a drop fiber in the business office.

The reflector is pre-disposed at the user access point (user access point). The reflector may reflect light of a particular wavelength without affecting light of a normal service wavelength. A light source and an optical power meter are disposed in the ONT. A cellular-based Narrowband Internet of Things (Narrowband Internet of Things, NB-IoT) chip, a Wireless Fidelity (Wireless Fidelity, Wi-Fi) chip, an infrared chip, a Bluetooth chip, or the like may be further disposed in the ONT. The user installs the drop fiber by inserting one end of the drop fiber into an optical fiber connector at the user access point and connecting the other end of the drop fiber to the ONT. After connecting the drop fiber, the user powers on the ONT. The ONT registers online information with a terminal operation and maintenance system by using the NB-IoT chip.

For example, the user access point usually includes a fiber access terminal (fiber access terminal, FAT), to implement functions such as connecting a distribution fiber to the drop fiber, fiber division, and fiber distribution. In China, the FAT is classified into a fiber access terminal and a splitter fiber access terminal by function. The splitter fiber access terminal is mainly a FAT in which an optical splitter may be configured. In other countries, the FAT is also sometimes referred to as an FDH (fiber distribution hub), a floor box, an FD (floor distributor), or an ODP (optical distribution box) according to habits of different regions or operators.

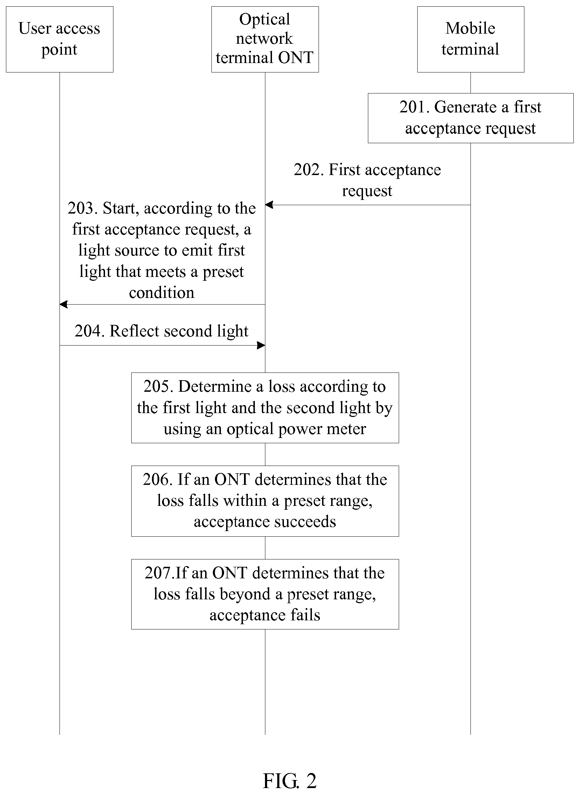

The following further describes the technical solutions of this application by using embodiments. As shown in FIG. 2, FIG. 2 is a schematic diagram of an embodiment of a detection method according to an embodiment of this application. The method includes the following steps.

201. A mobile terminal generates a first acceptance request.

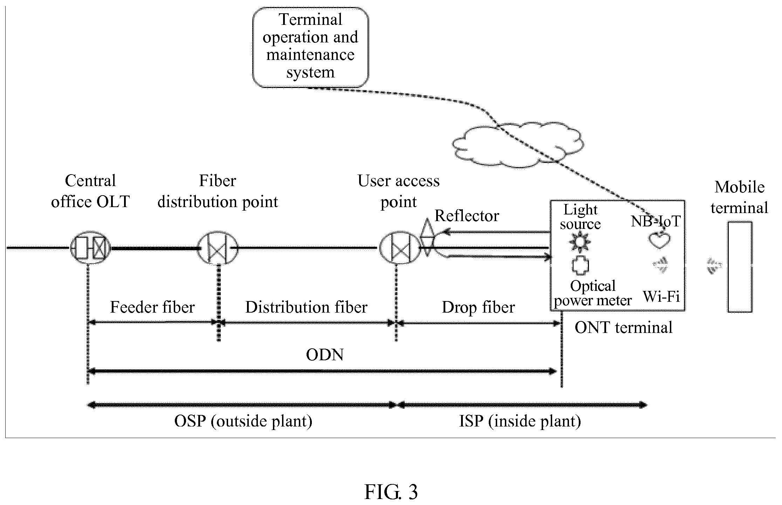

In this embodiment of this application, an optical network unit is described by using an optical network terminal ONT as an example. The mobile terminal may be a device such as a mobile phone, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a wearable electronic device, or a smartwatch. In this embodiment of this application, no special limitation is imposed on a specific form of the mobile terminal. FIG. 3 shows a schematic diagram of a scenario applied to the embodiment shown in FIG. 2. The mobile terminal responds to an operation of a user, generates the first acceptance request, and sends the first acceptance request to the ONT. The first acceptance request may also be referred to as a detection request, a check request, or the like, and no limitation is specifically imposed. The first acceptance request is used to detect a drop fiber installed for the ONT.

For example, a user downloads a mobile phone APP of ONT self-service operation and maintenance by using a mobile phone browser application (application, APP), or by scanning a quick response code on a shell of the ONT by using another APP that has a function of implementing network downloading through quick response code scanning, and installs the mobile phone self-service operation and maintenance APP. The mobile phone self-service operation and maintenance APP is connected to the ONT through Wi-Fi.

After the mobile phone self-service operation and maintenance APP is connected to the ONT, an ONT login interface is displayed, and the user inputs an initial user name and an initial password. After login succeeds, the user may start an installation acceptance process. For example, the user may perform one-touch installation acceptance, including but not limited to acceptance on one or more items such as drop fiber installation quality, an ONT hardware self-test, a registration status, a service status, a management status, or Wi-Fi quality.

For example, a manner in which the mobile terminal generates the first acceptance request may further include but is not limited to the following several implementations: generating the first acceptance request in a scenario in which the user performs an operation such as pressing, double-clicking, sliding, or rotating on a specific icon of the mobile terminal; or generating, by the mobile terminal, the first acceptance request in a scenario in which the user shakes the mobile terminal or places the terminal at a specific angle.

202. The mobile terminal sends the first acceptance request to an ONT.

The mobile terminal sends the first acceptance request to the ONT, and the ONT obtains the first acceptance request sent by the mobile terminal.

203. The ONT starts, according to the first acceptance request, a light source to emit first light that meets a preset condition.

The ONT may start, according to the first acceptance request, the light source to emit the first light that meets the preset condition. The preset condition may be a preset wavelength and a preset power. The light source and an optical power meter are disposed in the ONT, and an NB-IoT chip, a Wi-Fi chip, a Bluetooth chip, or the like may be further disposed in the ONT. No limitation is specifically imposed herein. The light source is used by the ONT to emit the first light. The optical power meter may be used by the ONT to determine a loss according to the emitted first light and received second light that is obtained after the first light is reflected.

It should be noted that the preset wavelength and the preset power herein are empirical values and may be flexibly adjusted according to an actual requirement. No limitation is specifically imposed herein.

204. A user access point reflects second light.

It should be noted that a reflector is pre-disposed at the user access point. The reflector may reflect light of a particular wavelength without affecting light of a normal service wavelength. That is, the user access point reflects the second light. The second light is light obtained after the first light is reflected by the reflector at the user access point.

205. The ONT determines a loss according to the first light and the second light by using an optical power meter.

Drop fiber acceptance and detection are performed as follows: The ONT determines, according to the second light obtained through reflection and the previously emitted first light and by using the optical power meter disposed in the ONT, whether the loss falls within a preset range. Optionally, after determining the loss, the ONT may further display the loss.

206. If the ONT determines that the loss falls within a preset range, acceptance performed by the ONT succeeds.

If the loss falls within the preset range, the acceptance succeeds, and the loss or prompt information such as "acceptance succeeds" may be displayed on the ONT.

207. If the ONT determines that the loss falls beyond a preset range, acceptance performed by the ONT fails, and the ONT prompts a repair suggestion.

If the loss falls beyond the preset range, the acceptance fails. For failed acceptance, the ONT may prompt the repair suggestion, that is, prompt the user to check whether the drop fiber is broken or whether an optical fiber connector is tightly inserted, or may prompt a customer service phone number, or the like.

Optionally, in some embodiments of this application, the ONT may send the loss to the mobile terminal, and the mobile terminal receives the loss sent by the ONT. If the mobile terminal determines that the loss falls within the preset range, acceptance succeeds. If the mobile terminal determines that the loss falls beyond the preset range, acceptance fails.

Optionally, in some embodiments of this application, the mobile terminal generates a second acceptance request.

The mobile terminal responds to an operation of the user and generates the second acceptance request. The second acceptance request is used by the ONT to detect a working status. It should be noted that in actual application, the first acceptance request and the second acceptance request may be a same acceptance request, or may be different acceptance requests.

The mobile terminal sends the second acceptance request to the ONT.

The mobile terminal sends the second acceptance request to the ONT. After the determining, if the ONT determines that the loss falls within a preset range, that acceptance performed by the ONT succeeds, the ONT obtains the second acceptance request sent by the mobile terminal. It can be understood that if the first acceptance request and the second acceptance request are the same acceptance request, the ONT may continue to perform acceptance on the working status after the acceptance performed by the ONT on the drop fiber succeeds; or if the first acceptance request and the second acceptance request are different acceptance requests, the ONT may perform acceptance on the drop fiber according to the first acceptance request and may perform acceptance on the working status according to the second acceptance request. It should be noted that for a manner in which the mobile terminal generates the second acceptance request, reference may be made to the foregoing specific description of the manner in which the first acceptance request is generated, and details are not described herein again.

The ONT detects a working status of the ONT according to the second acceptance request.

The detecting, by the ONT, a working status of the ONT according to the second acceptance request may include: detecting, by the ONT, a hardware function, a registration status, a service status, or a management status of the ONT according to the second acceptance request.

The following provides descriptions separately:
(1) The detecting a hardware function of the ONT may include: detecting a central processing unit, a memory, or an optical module; and determining, if detection fails, that acceptance performed by the ONT fails; or determining, if detection succeeds, that acceptance performed by the ONT succeeds. For example, the ONT performs a necessary hardware self-test, including but not limited to a self-test of the CPU, the memory, and the optical module of the ONT. If no self-test fails, the acceptance succeeds. If a self-test fails, the acceptance fails.
(2) The detecting a registration status of the ONT may include: detecting whether the ONT normally registers with and gets online on an optical line terminal; and determining, if the ONT normally gets online, that acceptance performed by the ONT succeeds; or determining, if the ONT fails to get online, that acceptance performed by the ONT fails.
(3) The detecting a service status of the ONT may include: detecting whether dynamic host control protocol dialing or Point-to-Point Protocol over Ethernet dialing of the ONT is normal; and determining, if the Internet Protocol is successfully obtained, that acceptance performed by the ONT succeeds; or determining, if the Internet Protocol fails to be obtained, that acceptance performed by the ONT fails.
(4) The detecting a management status of the ONT may include: detecting whether a status of a connection between the ONT and a terminal operation and maintenance system is normal; and determining, if the connection is normal, that acceptance performed by the ONT succeeds; or determining, if the connection is abnormal, that acceptance performed by the ONT fails.
(5) The detecting Wi-Fi quality of the ONT may include: detecting interference on a Wi-Fi operating channel of the ONT, performing Wi-Fi speed measurement between a mobile phone operation and maintenance assistant and the ONT, and providing an acceptance result.

After the acceptance is completed, an overall acceptance result (success or failure) is provided, and a detailed acceptance result may be expanded. If an acceptance item fails, a repair suggestion may be provided. A mobile phone operation and maintenance assistant APP supports one-touch acceptance of the foregoing functions and also supports separate acceptance and detection of each acceptance item.

In this embodiment of this application, the ONT may perform acceptance on drop fiber installation, and further, may perform acceptance on the working status of the ONT. Therefore, detection or problem diagnosis does not need to be performed by specialized installation and maintenance engineers, thereby saving human resources and reducing costs. The user may be allowed to self-install the drop fiber and the ONT and perform installation acceptance, so as to reduce home installation costs for an operator. When an ODN encounters a problem, the operator can perform remote troubleshooting by using NB-IoT, thereby reducing costs of performing home corrective maintenance by an operation and maintenance engineer of the operator.

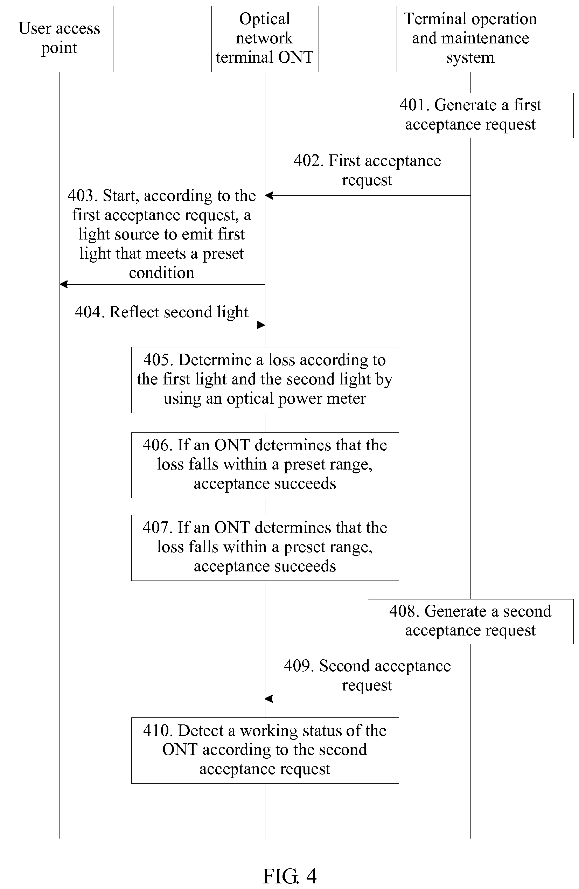

As shown in FIG. 4, FIG. 4 is a schematic diagram of an embodiment of a detection method according to an embodiment of this application. The method includes the following steps.

401. A terminal operation and maintenance system generates a first acceptance request.

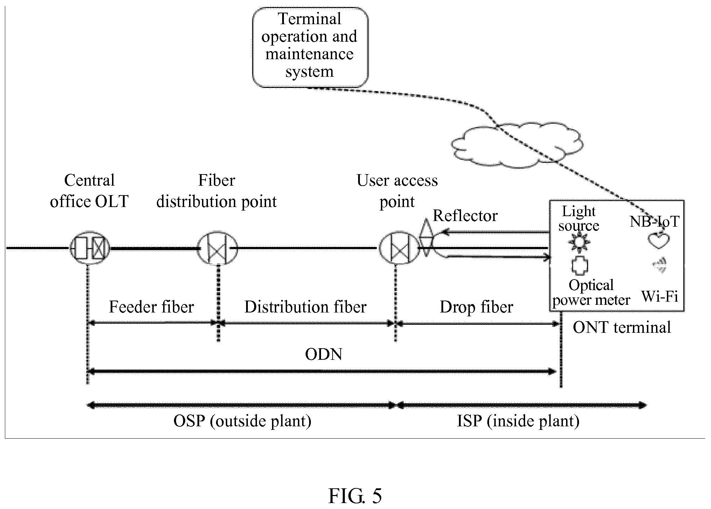

In this embodiment of this application, if finding that an ONT service is abnormal, a user calls an operator for help. An operation and maintenance engineer of the operator logs in to the terminal operation and maintenance system and starts ONT one-touch installation acceptance for the user through an NB-IoT management channel. The terminal operation and maintenance system responds to an operation of the operation and maintenance engineer and generates the first acceptance request. Acceptance on ONT installation may include but is not limited to acceptance on drop fiber installation quality, an ONT hardware self-test, a registration status, a service status, a management status, and Wi-Fi quality. FIG. 5 shows a schematic diagram of a scenario applied to the embodiment shown in FIG. 4.

As shown in FIG. 5, no mobile terminal is included, and the acceptance request that triggers an ONT to perform an acceptance operation is generated by the terminal operation and maintenance system. The first acceptance request may also be referred to as a detection request, a check request, or the like, and no limitation is specifically imposed. The first acceptance request is used to detect a drop fiber installed for the ONT.

It should be noted that there may be two ONT management channels between the terminal operation and maintenance system and the ONT. One is a fiber channel, and the other is an NB-IoT channel. The NB-IoT channel is used for remote ONT acceptance and diagnosis only when the ONT cannot be managed by using the fiber channel.

402. The terminal operation and maintenance system sends the first acceptance request to an ONT.

The terminal operation and maintenance system sends the first acceptance request to the ONT, and the ONT obtains the first acceptance request sent by the terminal operation and maintenance system.

403. The ONT starts, according to the first acceptance request, a light source to emit first light that meets a preset condition.

The ONT may start, according to the first acceptance request, the light source to emit the first light that meets the preset condition. The preset condition may be a preset wavelength and a preset power. The light source and an optical power meter are disposed in the ONT, and an NB-IoT chip and a Wi-Fi chip may be further disposed in the ONT. The light source is used by the ONT to emit the first light. The optical power meter may be used by the ONT to determine a loss according to the emitted first light and received second light that is obtained after the first light is reflected.

It should be noted that the preset wavelength and the preset power herein are empirical values and may be flexibly adjusted according to an actual requirement. No limitation is specifically imposed herein.

404. A user access point reflects second light.

It should be noted that a reflector is pre-disposed at the user access point. The reflector may reflect light of a particular wavelength without affecting light of a normal service wavelength. That is, the user access point reflects the second light. The second light is light obtained after the first light is reflected by the reflector at the user access point.

405. The ONT determines a loss according to the first light and the second light by using an optical power meter.

Drop fiber acceptance and detection are performed as follows: The ONT determines, according to the second light obtained through reflection and the previously emitted first light and by using the optical power meter disposed in the ONT, whether the loss falls within a preset range. Optionally, after determining the loss, the ONT may further display the loss.

406. If the ONT determines that the loss falls within a preset range, acceptance performed by the ONT succeeds.

If the loss falls within the preset range, the acceptance succeeds, and the loss or prompt information such as "acceptance succeeds" may be displayed on the ONT.

407. If the ONT determines that the loss falls beyond a preset range, acceptance performed by the ONT fails, and the ONT prompts a repair suggestion.

If the loss falls beyond the preset range, the acceptance fails. For failed acceptance, the ONT may prompt the repair suggestion, that is, prompt the user to check whether the drop fiber is broken or whether an optical fiber connector is tightly inserted, or may prompt a customer service phone number, or the like.

Optionally, the ONT may also send the loss to the terminal operation and maintenance system, and the terminal operation and maintenance system receives the loss sent by the ONT. If the terminal operation and maintenance system determines that the loss falls within the preset range, acceptance succeeds. If the terminal operation and maintenance system determines that the loss falls beyond the preset range, acceptance fails.

408. The terminal operation and maintenance system generates a second acceptance request.

The terminal operation and maintenance system responds to an operation of the user and generates the second acceptance request. The second acceptance request is used by the ONT to detect a working status. It should be noted that in actual application, the first acceptance request and the second acceptance request may be a same acceptance request, or may be different acceptance requests. It should be noted that for a manner in which the terminal operation and maintenance system generates the second acceptance request, reference may be made to the foregoing specific description of the manner in which the first acceptance request is generated, and details are not described herein again.

409. The terminal operation and maintenance system sends the second acceptance request to the ONT.

The terminal operation and maintenance system sends the second acceptance request to the ONT. After the determining, if the ONT determines that the loss falls within a preset range, that acceptance performed by the ONT succeeds, the ONT obtains the second acceptance request sent by the terminal operation and maintenance system. It can be understood that if the first acceptance request and the second acceptance request are the same acceptance request, the ONT may continue to perform acceptance on the working status after the acceptance performed by the ONT on the drop fiber succeeds; or if the first acceptance request and the second acceptance request are different acceptance requests, the ONT may perform acceptance on the drop fiber according to the first acceptance request and may perform acceptance on the working status according to the second acceptance request.

410. The ONT detects a working status of the ONT according to the second acceptance request.

The detecting, by the ONT, a working status of the ONT according to the second acceptance request may include: detecting, by the ONT, a hardware function, a registration status, a service status, or a management status of the ONT according to the second acceptance request.

The following provides descriptions separately:
(1) The detecting a hardware function of the ONT may include: detecting a central processing unit, a memory, or an optical module; and determining, if detection fails, that acceptance performed by the ONT fails; or determining, if detection succeeds, that acceptance performed by the ONT succeeds. For example, the ONT performs a necessary hardware self-test, including but not limited to a self-test of the CPU, the memory, and the optical module of the ONT. If no self-test fails, the acceptance succeeds. If a self-test fails, the acceptance fails.
(2) The detecting a registration status of the ONT may include: detecting whether the ONT normally registers with and gets online on an optical line terminal; and determining, if the ONT normally gets online, that acceptance performed by the ONT succeeds; or determining, if the ONT fails to get online, that acceptance performed by the ONT fails.
(3) The detecting a service status of the ONT may include: detecting whether dynamic host control protocol dialing or Point-to-Point Protocol over Ethernet dialing of the ONT is normal; and determining, if the Internet Protocol is successfully obtained, that acceptance performed by the ONT succeeds; or determining, if the Internet Protocol fails to be obtained, that acceptance performed by the ONT fails.
(4) The detecting a management status of the ONT may include: detecting whether a status of a connection between the ONT and a terminal operation and maintenance system is normal; and determining, if the connection is normal, that acceptance performed by the ONT succeeds; or determining, if the connection is abnormal, that acceptance performed by the ONT fails.
(5) The detecting Wi-Fi quality of the ONT may include: detecting interference on a Wi-Fi operating channel of the ONT, performing Wi-Fi speed measurement between a mobile phone operation and maintenance assistant and the ONT, and providing an acceptance result.

After the acceptance is completed, an overall acceptance result (success or failure) is provided, and a detailed acceptance result may be expanded. If an acceptance item fails, a repair suggestion may be provided. The terminal operation and maintenance system supports one-touch acceptance of the foregoing functions and also supports separate acceptance and detection of each acceptance item. It should be noted that step 408 to step 410 are optional steps.

In this embodiment of this application, the ONT may perform acceptance on drop fiber installation, and further, may perform acceptance on the working status of the ONT. Therefore, detection or problem diagnosis does not need to be performed by specialized installation and maintenance engineers, thereby saving human resources and reducing costs. The user may be allowed to self-install the drop fiber and the ONT and perform installation acceptance, so as to reduce home installation costs for the operator. When an ODN encounters a problem, the operator can perform remote troubleshooting by using NB-IoT, thereby reducing costs of performing home corrective maintenance by an operation and maintenance engineer of the operator.

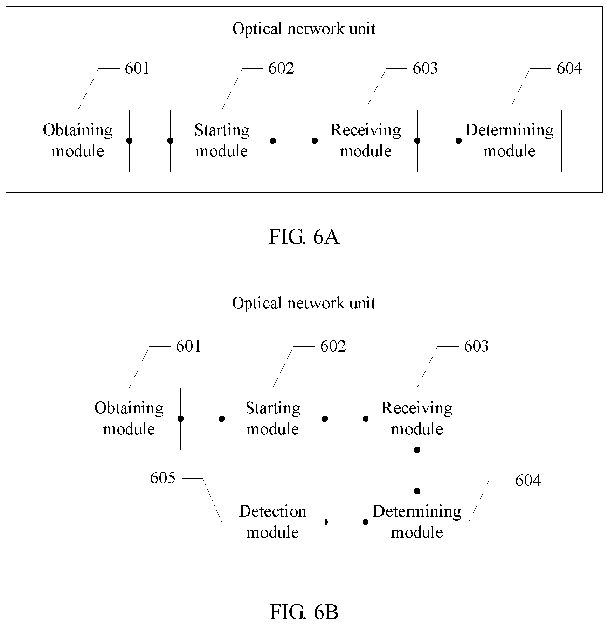

The embodiments of the detection method according to the embodiments of this application are described above. The following describes an optical network unit in an embodiment of this application. As shown in FIG. 6A, FIG. 6A is a schematic diagram of an embodiment of an optical network unit according to an embodiment of this application. A light source and an optical power meter are disposed in the optical network unit, and the optical network unit may further include:
an obtaining module 601, configured to obtain a first acceptance request;
a starting module 602, configured to start, according to the first acceptance request, the light source to emit first light that meets a preset condition;
a receiving module 603, configured to receive second light, where the second light is light obtained after the first light is reflected by a reflector; and
a determining module 604, configured to: determine a loss according to the first light and the second light by using the optical power meter; and determine, if the loss falls within a preset range, that acceptance succeeds; or determine, if the loss falls beyond the preset range, that acceptance fails.

Optionally, in some embodiments of this application, on a basis of FIG. 6A, as shown in FIG. 6B, FIG. 6B is a schematic diagram of another embodiment of an optical network unit according to an embodiment of this application. The optical network unit includes:
the obtaining module 601, further configured to obtain a second acceptance request; and
a detection module 605, configured to: detect a working status of the ONU according to the second acceptance request; and determine, if detection fails, that acceptance fails; or determine, if detection succeeds, that acceptance succeeds.

Optionally, in some embodiments of this application,
the detection module 605 is specifically configured to detect a hardware function, a registration status, a service status, or a management status of the ONU according to the second acceptance request.

Optionally, in some embodiments of this application,
the detection module 605 is specifically configured to: detect a central processing unit, a memory, or an optical module; and determine, if detection fails, that acceptance performed by the ONU fails; or determine, if detection succeeds, that acceptance performed by the ONU succeeds; or,
the detection module 605 is specifically configured to: detect whether the ONU normally registers with and gets online on an optical line terminal; and determine, if the ONU normally gets online, that acceptance performed by the ONU succeeds; or determine, if the ONU fails to get online, that acceptance performed by the ONU fails; or,
the detection module 605 is specifically configured to: detect whether dynamic host control protocol dialing or Point-to-Point Protocol over Ethernet dialing of the ONU is normal; and determine, if the Internet Protocol is successfully obtained, that acceptance performed by the ONU succeeds; or determine, if the Internet Protocol fails to be obtained, that acceptance performed by the ONU fails; or,
the detection module 605 is specifically configured to: detect whether a status of a connection between the ONU and a terminal operation and maintenance system is normal; and determine, if the connection is normal, that acceptance performed by the ONU succeeds; or determine, if the connection is abnormal, that acceptance performed by the ONU fails.

Optionally, in some embodiments of this application,
the obtaining module 601 is specifically configured to obtain the first acceptance request sent by a mobile terminal; or,
the obtaining module 601 is specifically configured to obtain the first acceptance request sent by the terminal operation and maintenance system.

In this embodiment, the optical network unit is presented in a form in which functional modules are divided according to functions, or the optical network unit is presented in a form in which functional modules are divided in an integrated manner. The "module" herein may be an application-specific integrated circuit (application-specific integrated circuit, ASIC), a circuit, an optical component, a processor and a storage that execute one or more software or firmware programs, an integrated logic circuit, and/or another component that can provide the foregoing function, or a combination thereof.

The optical network unit provided in this embodiment of this application may be used to execute the foregoing detection method. Therefore, for technical effects that can be achieved by the optical network unit, refer to the foregoing method embodiments, and details are not described herein again.

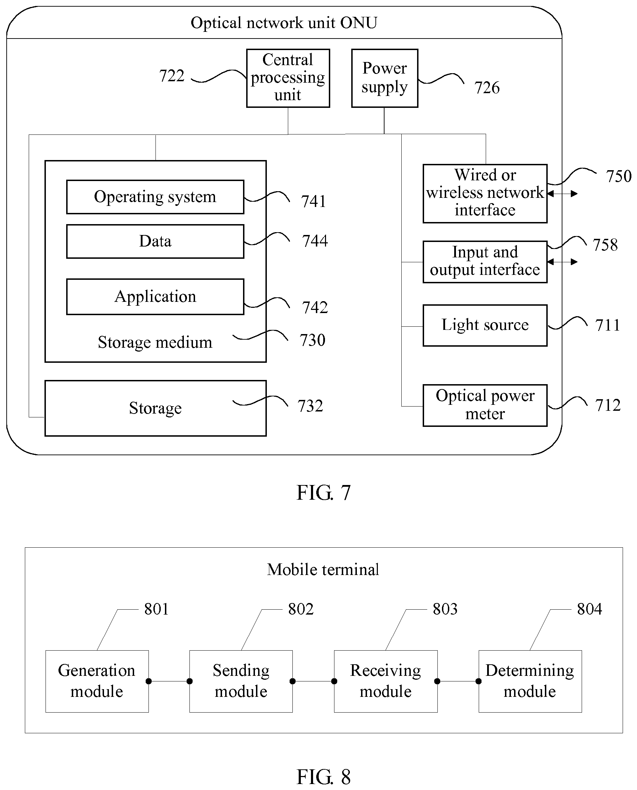

As shown in FIG. 7, FIG. 7 is a schematic diagram of another embodiment of an optical network unit according to an embodiment of this application. The optical network unit may generate a relatively large difference due to a configuration or performance difference, and may include a light source 711, an optical power meter 712, one or more central processing units (central processing unit, CPU) 722 (for example, one or more processors), a storage 732, and one or more storage media 730 (for example, one or more massive storage devices) that store an application 742 or data 744. The storage 732 and the storage medium 730 may implement temporary or persistent storage. A program stored in the storage medium 730 may include one or more modules (not marked in the figure). Each module may include a series of instruction operations that are executed on the optical network unit. Further, the central processing unit 722 may be set to communicate bidirectionally with the storage medium 730, to execute, on the optical network unit, the series of instruction operations in the storage medium 730.

The optical network unit may further include one or more power supplies 726, one or more wired or wireless network interfaces 750, one or more input and output interfaces 758, and/or one or more operating systems 741, for example, Windows Server TM, Mac OS XTM, Unix TM, Linux TM, or FreeBSDTM.

Steps performed by the optical network unit in the foregoing embodiment may be based on a structure of the optical network unit shown in FIG. 7.

Persons skilled in the art may figure out that the optical network unit in FIG. 6A may be implemented in a form shown in FIG. 7. For example, the obtaining module 601, the starting module 602, the receiving module 603, and the determining module 604 in FIG. 6A may be implemented by using the light source 711, the optical power meter 712, the processor 722, the storage 732, and the storage medium 730 in FIG. 7. Specifically, the starting module 602, the determining module 604, and the detection module 605 may be implemented by using the processor 722 to invoke application code stored in the storage. This is not limited in this embodiment of this application. In this embodiment of this application, the processor 722 included in the optical network unit may perform related steps in the embodiment in FIG. 2 or FIG. 4, and details are not described herein again.

As shown in FIG. 8, FIG. 8 is a schematic diagram of an embodiment of a mobile terminal according to an embodiment of this application. The mobile terminal includes:
a generation module 801, configured to generate an acceptance request;
a sending module 802, configured to send the acceptance request to an optical network unit ONU, where the acceptance request is used by the ONU for acceptance;
a receiving module 803, configured to receive a loss sent by the ONU; and
a determining module 804, configured to determine, if the mobile terminal determines that the loss falls within a preset range, that acceptance succeeds; or determine, if the mobile terminal determines that the loss falls beyond the preset range, that acceptance fails.

Optionally, in some embodiments of this application,
the determining module 804 is specifically configured to: display, by the mobile terminal, the loss if the mobile terminal determines that the loss falls within the preset range; or prompt, by the mobile terminal, a repair suggestion if the mobile terminal determines that the loss falls beyond the preset range.

Optionally, in some embodiments of this application,
the sending module 802 is specifically configured to send, by the mobile terminal, the acceptance request to the ONU through Wireless Fidelity Wi-Fi, Bluetooth, or infrared; and
the receiving module 803 is specifically configured to receive, through the Wi-Fi, the Bluetooth, or the infrared, the loss sent by the ONU.

In this embodiment, the mobile terminal is presented in a form in which functional modules are divided according to functions, or the mobile terminal is presented in a form in which functional modules are divided in an integrated manner. The "module" herein may be an application-specific integrated circuit (application-specific integrated circuit, ASIC), a circuit, an optical component, a processor and a storage that execute one or more software or firmware programs, an integrated logic circuit, and/or another component that can provide the foregoing function, or a combination thereof.

The mobile terminal provided in this embodiment of this application may be used to execute the foregoing detection method. Therefore, for technical effects that can be achieved by the mobile terminal, refer to the foregoing method embodiments, and details are not described herein again.

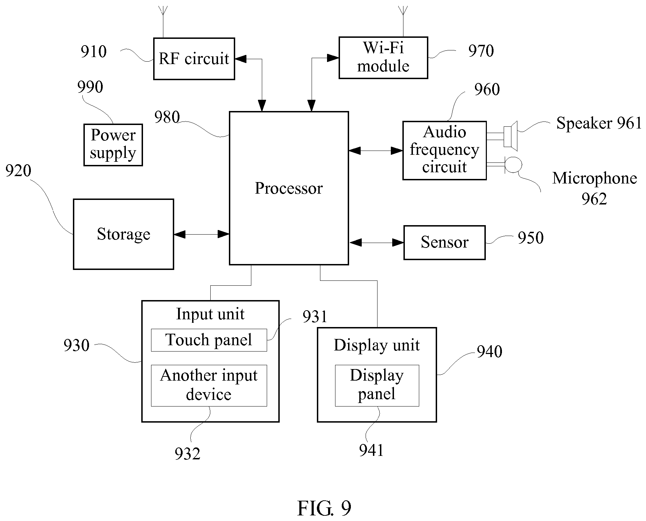

As shown in FIG. 9, FIG. 9 is a schematic diagram of another embodiment of a mobile terminal according to an embodiment of this application. The mobile terminal may be described by using a mobile phone as an example, and may include:
components such as a radio frequency (Radio Frequency, RF) circuit 910, a storage 920, an input unit 930, a display unit 940, a sensor 950, an audio frequency circuit 960, a Wireless Fidelity (Wireless Fidelity, Wi-Fi) module 970, a processor 980, and a power supply 990. Persons skilled in the art may understand that a mobile phone structure shown in FIG. 9 does not constitute any limitation on the mobile phone. The mobile phone may include components more or fewer than those shown in the figure, or in the mobile phone, some components are combined, or components are disposed differently.

The following describes each component of the mobile phone in detail with reference to FIG. 9.

The RF circuit 910 may be configured to send or receive information, or send or receive a signal in a call process. In particular, the RF circuit 910 receives downlink information from a base station and sends the information to the processor 980 for processing, and sends uplink data to the base station. Usually, the RF circuit 910 includes but is not limited to an antenna, at least one amplifier, a transceiver, a coupler, a low noise amplifier (low noise amplifier, LNA), and a duplexer. In addition, the RF circuit 910 may further communicate bidirectionally with a network and another device through wireless communication. Any communications standard or protocol may be used for the wireless communication, including but not limited to Global System for Mobile Communications (Global System for Mobile Communications, GSM), General Packet Radio Service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, and a short message service (short message service, SMS).

The storage 920 may be configured to store a software program and a module. The processor 980 runs the software program and the module that are stored in the storage 920, so as to execute various function applications of the mobile phone and perform data processing. The storage 920 may mainly include a program storage area and a data storage area. The program storage area may store an operating system, an application required by at least one function (such as an audio play function and an image play function), and the like. The data storage area may store data (such as audio data and a phone book) that is created according to use of the mobile phone, and the like. In addition, the storage 920 may include a high-speed random access memory, and may further include a nonvolatile memory, for example, at least one disk storage device, a flash memory device, or another nonvolatile solid-state storage device.

The input unit 930 may be configured to receive entered numeral or character information, and generate a key signal input related to a user setting and function control of the mobile phone. Specifically, the input unit 930 may include a touch panel 931 and another input device 932. The touch panel 931 is also referred to as a touchscreen, and may collect a touch operation performed by a user on or near the touch panel 931 (for example, an operation performed by the user on or near the touch panel 931 by using any proper object or accessory such as a finger or a stylus), and drive a corresponding connecting apparatus according to a preset program. Optionally, the touch panel 931 may include two parts: a touch detection apparatus and a touch controller. The touch detection apparatus detects a touch orientation of the user, detects a signal brought by a touch operation, and transmits the signal to the touch controller. The touch controller receives touch information from the touch detection apparatus, converts the touch information into contact coordinates, and sends the contact coordinates to the processor 980, and can receive and execute a command sent by the processor 980. In addition, the touch panel 931 may be implemented by using a plurality of types, such as a resistive type, a capacitive type, an infrared type, and a surface acoustic wave type. In addition to the touch panel 931, the input unit 930 may further include the another input device 932. Specifically, the another input device 932 may include but is not limited to one or more of a physical keyboard, a function key (such as a volume control key or an on/off key), a trackball, a mouse, and a joystick.

The display unit 940 may be configured to display information entered by a user or information provided for a user and various menus of the mobile phone. The display unit 940 may include a display panel 941. Optionally, the display panel 941 may be configured in a form such as a liquid crystal display (Liquid Crystal Display, LCD) or an organic light-emitting diode (Organic Light-Emitting Diode, OLED). Further, the touch panel 931 may cover the display panel 941. When the touch panel 931 detects a touch operation on or near the touch panel 931, the touch panel 931 transmits the touch operation to the processor 980 to determine a type of a touch event. Then, the processor 980 provides a corresponding visual output on the display panel 941 according to the type of the touch event. In FIG. 9, the touch panel 931 and the display panel 941 are configured as two independent components to implement input and output functions of the mobile phone. However, in some embodiments, the touch panel 931 and the display panel 941 may be integrated to implement the input and output functions of the mobile phone.

The mobile phone may further include at least one sensor 950, such as a light sensor, a motion sensor, or another sensor. Specifically, the light sensor may include an ambient light sensor and a proximity sensor. The ambient light sensor may adjust luminance of the display panel 941 according to brightness of ambient light. The proximity sensor may turn off the display panel 941 and/or backlight when the mobile phone moves near an ear. As a type of motion sensor, an accelerometer sensor may detect acceleration magnitudes in all directions (usually in three axes), may detect a magnitude and a direction of gravity when the accelerometer sensor is stationary, and may be configured to recognize a posture application of the mobile phone (such as switching between a landscape mode and a portrait mode, related games, and magnetometer posture calibration), a vibration related function (such as a pedometer and stroke), and the like. As regards other sensors that may be further configured for the mobile phone, such as a gyroscope, a barometer, a hygrometer, a thermometer, and an infrared sensor, details are not described herein.

The audio frequency circuit 960, a speaker 961, and a microphone 962 may provide an audio interface between the user and the mobile phone. The audio frequency circuit 960 may transmit, to the speaker 961, an electrical signal that is obtained after conversion of received audio data, and the speaker 961 converts the electrical signal into a sound signal and outputs the sound signal. In another aspect, the microphone 962 converts a collected sound signal into an electrical signal. The audio frequency circuit 960 receives the electrical signal, converts the electrical signal into audio data, and outputs the audio data to the processor 980 for processing. Then, the audio data is sent to, for example, another mobile phone, by using the RF circuit 910, or the audio data is output to the storage 920 for further processing.

Wi-Fi is a short-range wireless transmission technology. The mobile phone may help, by using the Wi-Fi module 970, the user to send and receive e-mails, browse web pages, access streaming media, and the like. Wi-Fi provides wireless broadband Internet access for the user. Although FIG. 9 shows the Wi-Fi module 970, it may be understood that, the Wi-Fi module 970 is not a mandatory component of the mobile phone, and may be completely omitted according to a requirement without changing the essence of the present invention.

The processor 980 is a control center of the mobile phone and is connected to each part of the entire mobile phone by using various interfaces and lines, and performs, by running or executing the software program and/or module that is stored in the storage 920 and invoking data stored in the storage 920, various functions of the mobile phone and data processing, so as to perform overall monitoring on the mobile phone. Optionally, the processor 980 may include one or more processing units. An application processor and a modem processor may be integrated in the processor 980. The application processor mainly processes an operating system, a user interface, an application, and the like. The modem processor mainly processes wireless communication. It may be understood that the foregoing modem processor may alternatively not be integrated in the processor 980.

The mobile phone further includes the power supply 990 (such as a battery) that supplies power to each component. Preferably, the power supply may be logically connected to the processor 980 by using a power supply management system, so that functions such as management of charging, discharging, and power consumption are implemented by using the power supply management system.

The mobile phone may further include a camera, a Bluetooth module, and the like, although they are not shown. Details are not described herein.

Persons skilled in the art may figure out that the mobile terminal in FIG. 8 may be implemented in a form shown in FIG. 9. For example, the sending module 802 and the receiving module 803 in FIG. 8 may be implemented by using the RF circuit 910 in FIG. 9. Specifically, the generation module 801 and the determining module 804 may be implemented by using the processor 980 to invoke application code stored in the storage. This is not limited in this embodiment of this application. In this embodiment of this application, the processor 980 included in the mobile terminal may perform related steps in the embodiment in FIG. 2 or FIG. 4, and details are not described herein again.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, some or all of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separated, and parts shown as units may or may not be physical units, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The software product is stored in a storage medium and includes several instructions for instructing a computer device (which may be a personal computer, a server, a network device, or the like) to perform all or some of the steps of the methods described in the embodiments of this application. The storage medium includes: any medium that can store program code, such as a USB flash drive, a removable hard disk, a read-only memory (ROM, read-only memory), a random access memory (RAM, random access memory), a magnetic disk, or an optical disc.

The foregoing embodiments are merely intended for describing the technical solutions of this application, but not for limiting this application.

## Claims

1. A detection method, wherein the method is applied to an optical network unit, ONU, a light source and an optical power meter are disposed in the ONU, and the method comprises:
obtaining (202, 402), by the ONU, a first acceptance request;
starting (203, 403), by the ONU according to the first acceptance request, the light source to emit first light that meets a preset condition, wherein the preset condition comprises a preset wavelength, wherein the preset wavelength is different from a normal service wavelength;
receiving (204, 404), by the ONU, second light, wherein the second light is light obtained after the first light is reflected by a reflector, wherein the reflector is pre-disposed at an user access point, and the ONU is connected with the user access point by a drop fiber, and wherein the reflector is used to reflect light of the preset wavelength and light of the normal service wavelength is not affected by the reflector;
determining (205, 405), by the ONU, a loss according to the first light and the second light by using the optical power meter; and determining (206, 207), according to the loss, whether the drop fiber is faulty;
wherein after the determining, according to the loss, whether the drop fiber is faulty, the method further comprises:
obtaining (409), by the ONU, a second acceptance request;
detecting (410), by the ONU, a working status of the ONU according to the second acceptance request.

2. The method according to claim 1, wherein the detecting, by the ONU, a working status of the ONU according to the second acceptance request comprises:
detecting, by the ONU, a hardware function, a registration status, a service status, or a management status of the ONU according to the second acceptance request.

3. The method according to claim 2, wherein the detecting a hardware function of the ONU comprises:
detecting a central processing unit, a memory, or an optical module; or,
the detecting a registration status of the ONU comprises:
detecting whether the ONU normally registers with and gets online on an optical line terminal; or,
the detecting a service status of the ONU comprises:
detecting whether Dynamic Host Configuration Protocol dialing or Point-to-Point Protocol over Ethernet dialing of the ONU is normal; or,
the detecting a management status of the ONU comprises:
detecting whether a status of a connection between the ONU and a terminal operation and maintenance system is normal.

4. An optical network unit, ONU, wherein a light source and an optical power meter are disposed in the ONU, and the ONU comprises:
one or more processors (722);
a storage (732);
a plurality of applications (742); and
one or more computer programs, wherein the one or more computer programs are stored in the storage, the one or more computer programs comprise an instruction, and when the instruction is executed by the ONU, the ONU performs the following steps:
obtaining (202, 402) a first acceptance request;
starting (203, 403), according to the first acceptance request, the light source to emit first light that meets a preset condition, wherein the preset condition comprises a preset wavelength, wherein the preset wavelength is different from a normal service wavelength;
receiving (204, 404) second light, wherein the second light is light obtained after the first light is reflected by a reflector, wherein the reflector is pre-disposed at an user access point, and the ONU is connected with the user access point by a drop fiber, and wherein the reflector is used to reflect light of the preset wavelength and light of the normal service wavelength is not affected by the reflector;
determining (205, 405) a loss according to the first light and the second light by using the optical power meter; and
determining (206, 207), according to the loss, whether the drop fiber is faulty;
wherein the steps further comprise:
obtaining (409) a second acceptance request;
detecting (410) a working status of the ONU according to the second acceptance request.

5. The optical network unit according to claim 4, wherein the steps further comprise:
detecting a hardware function, a registration status, a service status, or a management status of the ONU according to the second acceptance request.

6. The optical network unit according to claim 5, wherein the steps further comprise:
detecting a central processing unit, a memory, or an optical module;
or,
detecting whether the ONU normally registers with and gets online on an optical line terminal;
or,
detecting whether dynamic host control protocol dialing or Point-to-Point Protocol over Ethernet dialing of the ONU is normal;
or,
detecting whether a status of a connection between the ONU and a terminal operation and maintenance system is normal.

7. A computer readable storage medium comprising an instruction, wherein when the computer readable storage medium runs on the optical network unit according to any one of claims 4 to 6, the optical network unit performs the method according to any one of claims 1 to 3.

8. A computer program product comprising an instruction, wherein when the computer program product runs on an optical network unit, the optical network unit according to any of claims 4 to 6 executes the method according to any one of claims 1 to 3.

## Patentansprüche

1. Detektionsverfahren, wobei das Verfahren auf eine optische Netzwerkeinheit (ONU) angewendet wird, wobei in der ONU eine Lichtquelle und ein optischer Leistungsmesser angeordnet ist und das Verfahren Folgendes umfasst:
Erlangen (202, 402) einer ersten Annahmeanforderung durch die ONU;
Starten (203, 403) der Lichtquelle durch die ONU gemäß der ersten Annahmeanforderung, um erstes Licht auszusenden, das eine voreingestellte Bedingung erfüllt, wobei die voreingestellte Bedingung eine voreingestellte Wellenlänge umfasst, wobei sich die voreingestellte Wellenlänge von einer normalen Dienstwellenlänge unterscheidet;
Empfangen (204, 404) eines zweiten Lichts durch die ONU, wobei das zweite Licht erlangt wird, nachdem das erste Licht von einem Reflektor reflektiert wurde, wobei der Reflektor an einem Benutzerzugangspunkt vorgesehen ist und die ONU über eine Drop-Faser mit dem Benutzerzugangspunkt verbunden ist, und wobei der Reflektor verwendet wird, um Licht der voreingestellten Wellenlänge zu reflektieren, während Licht der normalen Dienstwellenlänge von dem Reflektor nicht beeinflusst wird;
Bestimmen (205, 405) eines Verlusts durch die ONU anhand des ersten Lichts und des zweiten Lichts unter Verwendung des optischen Leistungsmessers; und Bestimmen (206, 207) durch die ONU anhand des Verlusts, ob die Drop-Faser fehlerhaft ist;
wobei das Verfahren nach dem Bestimmen anhand des Verlusts, ob die Drop-Faser fehlerhaft ist, ferner umfasst:
Erlangen (409) einer zweiten Annahmeanforderung durch die ONU;
Erfassen (410) eines Betriebszustands der ONU durch die ONU gemäß der zweiten Annahmeanforderung.

2. Verfahren nach Anspruch 1, wobei das Erfassen eines Betriebszustands der ONU durch die ONU gemäß der zweiten Annahmeanforderung umfasst:
Erfassen, durch die ONU, einer Hardwarefunktion, eines Registrierungszustands, eines Dienstzustands oder eines Verwaltungszustands der ONU gemäß der zweiten Annahmeanforderung.

3. Verfahren nach Anspruch 2, wobei das Erfassen einer Hardwarefunktion der ONU umfasst:
Erfassen einer zentralen Verarbeitungseinheit, eines Speichers oder eines optischen Moduls; oder
das Erfassen eines Registrierungsstatus der ONU umfasst:
Erfassen, ob sich die ONU ordnungsgemäß bei einem optischen Leitungsterminal registriert und online geht; oder
das Erfassen eines Dienststatus der ONU umfasst:
Erfassen, ob ein Wählen des Dynamic Host Configuration Protocol oder des Point-to-Point Protocol over Ethernet der ONU ordnungsgemäß ist; oder
das Erfassen eines Verwaltungsstatus der ONU umfasst:
Erfassen, ob der Status einer Verbindung zwischen der ONU und
einem Terminalbetriebs- und -wartungssystem ordnungsgemäß ist.

4. Optische Netzwerkeinheit (ONU), wobei in der ONU eine Lichtquelle und ein optischer Leistungsmesser angeordnet sind und die ONU Folgendes umfasst:
einen oder mehrere Prozessoren (722);
einen Speicher (732);
eine Vielzahl von Anwendungen (742); und
ein oder mehrere Computerprogramme, wobei das eine oder die mehreren Computerprogramme in dem Speicher gespeichert sind, das eine oder die mehreren Computerprogramme eine Anweisung umfassen, und wenn die Anweisung durch die ONU ausgeführt werden, die ONU die folgenden Schritte durchführt:
Erlangen (202, 402) einer ersten Annahmeanforderung;
Starten (203, 403) der Lichtquelle gemäß der ersten Annahmeanforderung, um erstes Licht auszusenden, das eine voreingestellte Bedingung erfüllt, wobei die voreingestellte Bedingung eine voreingestellte Wellenlänge umfasst, wobei sich die voreingestellte Wellenlänge von einer normalen Dienstwellenlänge unterscheidet;
Empfangen (204, 404) eines zweiten Lichts, wobei das zweite Licht erlangt wird, nachdem das erste Licht von einem Reflektor reflektiert wurde, wobei der Reflektor an einem Benutzerzugangspunkt vorgesehen ist und die ONU über eine Drop-Faser mit dem Benutzerzugangspunkt verbunden ist, und wobei der Reflektor verwendet wird, um Licht der voreingestellten Wellenlänge zu reflektieren, während Licht der normalen Dienstwellenlänge von dem Reflektor nicht beeinflusst wird;
Bestimmen (205, 405) eines Verlusts anhand des ersten Lichts und des zweiten Lichts unter Verwendung des optischen Leistungsmessers; und
Bestimmen (206, 207) anhand des Verlusts, ob die Drop-Faser fehlerhaft ist;
wobei die Schritte ferner Folgendes umfassen:
Erlangen (409) einer zweiten Annahmeanforderung;
Erfassen (410) eines Betriebszustands der ONU gemäß der zweiten Annahmeanforderung.

5. Optische Netzwerkeinheit nach Anspruch 4, wobei die Schritte ferner umfassen:
Erfassen einer Hardwarefunktion, eines Registrierungszustands, eines Dienstzustands oder eines Verwaltungszustands der ONU gemäß der zweiten Annahmeanforderung.

6. Optische Netzwerkeinheit nach Anspruch 5, wobei die Schritte ferner umfassen:
Erfassen einer zentralen Verarbeitungseinheit, eines Speichers oder eines optischen Moduls;
oder,
Erfassen, ob sich die ONU ordnungsgemäß bei einem optischen Leitungsterminal registriert und online geht;
oder,
Erfassen, ob die Wahl des Dynamic Host Configuration Protocol oder des Point-to-Point Protocol over Ethernet der ONU normal ist;
oder,
Erfassen, ob der Status einer Verbindung zwischen der ONU und einem Terminalbetriebs- und -wartungssystem ordnungsgemäß ist.

7. Computerlesbares Speichermedium, eine Anweisung umfassend, wobei, wenn das computerlesbare Speichermedium auf der optischen Netzwerkeinheit gemäß einem der Ansprüche 4 bis 6 ausgeführt wird, die optische Netzwerkeinheit das Verfahren gemäß einem der Ansprüche 1 bis 3 durchführt.

8. Computerprogrammprodukt, eine Anweisung umfassend, wobei, wenn das Computerprogrammprodukt auf einer optischen Netzwerkeinheit ausgeführt wird, die optische Netzwerkeinheit gemäß einem der Ansprüche 4 bis 6 das Verfahren gemäß einem der Ansprüche 1 bis 3 durchführt.

## Revendications

1. Procédé de détection, dans lequel le procédé est appliqué à une unité de réseau optique, ONU, une source de lumière et un wattmètre optique sont disposés dans l'ONU, et le procédé comprend :
l'obtention (202, 402), par l'ONU, d'une première demande d'acceptation ;
le démarrage (203, 403), par l'ONU selon la première demande d'acceptation, de la source de lumière pour émettre une première lumière qui satisfait une condition prédéfinie, dans lequel la condition prédéfinie comprend une longueur d'onde prédéfinie, dans lequel la longueur d'onde prédéfinie est différente d'une longueur d'onde de service normale ;
la réception (204, 404), par l'ONU, d'une seconde lumière, dans lequel la seconde lumière est une lumière obtenue après que la première lumière a été réfléchie par un réflecteur, dans lequel le réflecteur est prédisposé à un point d'accès utilisateur, et
l'ONU est connectée au point d'accès utilisateur par une fibre de dérivation, et dans lequel le réflecteur est utilisé pour réfléchir de la lumière de la longueur d'onde prédéfinie et la lumière de la longueur d'onde de service normale n'est pas affectée par le réflecteur ;
la détermination (205, 405), par l'ONU, d'une perte selon la première lumière et la seconde lumière en utilisant le wattmètre optique ; et le fait de déterminer (206, 207), selon la perte, si la fibre de dérivation est défectueuse ;
dans lequel après avoir déterminé, selon la perte, si la fibre de dérivation est défectueuse, le procédé comprend également :
l'obtention (409), par l'ONU, d'une seconde demande d'acceptation ;
la détection (410), par l'ONU, d'un état de fonctionnement de l'ONU selon la seconde demande d'acceptation.

2. Procédé selon la revendication 1, dans lequel la détection, par l'ONU, d'un état de fonctionnement de l'ONU selon la seconde demande d'acceptation comprend :
la détection, par l'ONU, d'une fonction matérielle, d'un état d'enregistrement, d'un état de service, ou d'un état de gestion de l'ONU selon la seconde demande d'acceptation.

3. Procédé selon la revendication 2, dans lequel la détection d'une fonction matérielle de l'ONU comprend :
la détection d'une unité centrale de traitement, d'une mémoire, ou d'un module optique ; ou,
la détection d'un statut d'enregistrement de l'ONU comprend :
le fait de détecter si l'ONU s'enregistre normalement auprès de et se connecte à un terminal de ligne optique ; ou,
la détection d'un état de service de l'ONU comprend :
le fait de détecter si la numérotation du protocole de configuration dynamique d'hôte ou la numérotation du protocole point à point sur Ethernet de l'ONU est normale ; ou,
la détection d'un état de gestion de l'ONU comprend :
le fait de détecter si un état d'une connexion entre l'ONU et
un système d'exploitation et de maintenance du terminal est normal.

4. Unité de réseau optique, ONU, dans laquelle une source de lumière et un wattmètre optique sont disposés dans l'ONU, et l'ONU comprend :
un ou plusieurs processeurs (722) ;
un stockage (732) ;
une pluralité d'applications (742) ; et
un ou plusieurs programmes informatiques, dans laquelle les un ou plusieurs programmes informatiques sont stockés dans le stockage, les un ou plusieurs programmes informatiques comprennent une instruction, et lorsque l'instruction est exécutée par l'ONU, l'ONU réalise les étapes suivantes :
l'obtention (202, 402) d'une première demande d'acceptation ;
le démarrage (203, 403), selon la première demande d'acceptation, de la source de lumière pour émettre une première lumière qui satisfait une condition prédéfinie, dans laquelle la condition prédéfinie comprend une longueur d'onde prédéfinie, dans laquelle la longueur d'onde prédéfinie est différente d'une longueur d'onde de service normale ;
la réception (204, 404) d'une seconde lumière, dans laquelle la seconde lumière est une lumière obtenue après que la première lumière a été réfléchie par un réflecteur, dans laquelle le réflecteur est prédisposé à un point d'accès utilisateur, et l'ONU est connectée au point d'accès utilisateur par une fibre de dérivation, et dans laquelle le réflecteur est utilisé pour réfléchir de la lumière de la longueur d'onde prédéfinie et la lumière de la longueur d'onde de service normale n'est pas affectée par le réflecteur ;
la détermination (205, 405) d'une perte selon la première lumière et la seconde lumière en utilisant le wattmètre optique ; et
le fait de déterminer (206, 207), selon la perte, si la fibre de dérivation est défectueuse ;
dans laquelle les étapes comprennent également :
l'obtention (409) d'une seconde demande d'acceptation ;
la détection (410) d'un état de fonctionnement de l'ONU selon la seconde demande d'acceptation.

5. Unité de réseau optique selon la revendication 4, dans laquelle les étapes comprennent également :
la détection d'une fonction matérielle, d'un état d'enregistrement, d'un état de service, ou d'un état de gestion de l'ONU selon la seconde demande d'acceptation.

6. Unité de réseau optique selon la revendication 5, dans laquelle les étapes comprennent également :
la détection d'une unité centrale de traitement, d'une mémoire, ou d'un module optique ;
ou,
le fait de détecter si l'ONU s'enregistre normalement auprès de et se connecte à un terminal de ligne optique ;
ou,
le fait de détecter si la numérotation du protocole de configuration dynamique de l'hôte ou la numérotation du protocole point à point sur Ethernet de l'ONU est normale ;
ou,
le fait de détecter si un état d'une connexion entre l'ONU et un système d'exploitation et de maintenance du terminal est normal.

7. Support de stockage lisible par ordinateur comprenant une instruction, dans lequel lorsque le support de stockage lisible par ordinateur fonctionne sur une unité de réseau optique selon l'une quelconque des revendications 4 à 6, l'unité de réseau optique réalise le procédé selon l'une quelconque des revendications 1 à 3.

8. Produit de programme informatique comprenant une instruction, dans lequel lorsque le produit de programme informatique fonctionne sur une unité de réseau optique, l'unité de réseau optique selon l'une quelconque des revendications 4 à 6 exécute le procédé selon l'une quelconque des revendications 1 à 3.
